(19) Europäisches Patentamt
European Patent Office
Office européen des brevets

(11) **EP 3 618 525 A1**

(12) **EUROPEAN PATENT APPLICATION**
published in accordance with Art. 153(4) EPC

(43) Date of publication:
**04.03.2020 Bulletin 2020/10**

(51) Int Cl.:
**H04W 72/04** (2009.01)       **H04W 84/12** (2009.01)

(21) Application number: **18789988.5**

(86) International application number:
**PCT/CN2018/079771**

(22) Date of filing: **21.03.2018**

(87) International publication number:
**WO 2018/196510 (01.11.2018 Gazette 2018/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2017   CN 201710297387**

(71) Applicant: **ZTE Corporation**
**Shenzhen, Guangdong 518057 (CN)**

(72) Inventors:
• **YANG, Dan**
  **Shenzhen**
  **Guangdong 518057 (CN)**
• **HAN, Zhiqiang**
  **Shenzhen**
  **Guangdong 518057 (CN)**
• **LV, Kaiying**
  **Shenzhen**
  **Guangdong 518057 (CN)**
• **SUN, Bo**
  **Shenzhen**
  **Guangdong 518057 (CN)**
• **LU, Chen**
  **Shenzhen**
  **Guangdong 518057 (CN)**

(74) Representative: **Rosenberg, Muriel Sylvie et al**
**Ipsilon**
**Le Centralis**
**63, avenue du Général Leclerc**
**92340 Bourg-la-Reine (FR)**

(54) **RADIO FRAME TRANSMITTING METHOD AND APPARATUS**

(57)    A method for radio frame transmission, applied to a communication station, is provided, the method including: receiving a request frame sent simultaneously or in a time-sharing manner by one or more stations; and sending a broadcast response frame to the one or more stations. Also provided is a device for radio frame transmission. The solutions of the present application can improve the transmission efficiency.

receive a request frame sent simultaneously or in a time-sharing manner by at least one station — 11

send a broadcast response frame to the at least one station — 12

**Fig. 1**

**Description**

**TECHNICAL FIELD**

Embodiments of the present disclosure relate to, but are not limited to, the field of communications technologies, and in particular, to a method and a device for radio frame transmission.

**BACKGROUND**

With the massive applications of WLAN (Wireless Local Area Network) networks, the deployment of WLAN networks is becoming more intensive, the network load is becoming heavier, and the overlapping of network coverage is becoming more serious with the increase of networks. The efficiency of the WLAN network tends to decrease significantly, and this problem cannot be solved simply by increasing the air-interface rate. The techniques of interference avoidance and efficiency improvement in the case of dense deployment of networks become a hotspot in question.

In a WLAN, when a station (STA) joins a network, the station needs to perform association interaction with a target access point (AP) by sending an association request frame and an association response frame, and the association is successful when the AP accepts the association request and assigns an association identifier (AID) to the station.

To improve transmission efficiency, current WLANs support both uplink frequency division multiple access and downlink multi-user transmission techniques. The uplink frequency division multiple access technology is that an AP sends a trigger frame to trigger one or more associated STAs to send radio frames to the AP at the same time, and the AP distributes assigned channel resources for assigned AIDs when sending the trigger frame so as to allocate corresponding uplink transmission channel resources for each STA. Similarly, in the downlink multi-user transmission technology, an AP needs to indicate the scheduling information for the users, that is, the AP notifies a user of the resources occupied by the downlink data by assigning channel resources for the corresponding AID in the signaling field of the header of the physical frame. In addition, in existing technologies, the AP is supported to allocate uplink random access resources to an unassociated station sending an association request frame, where a specific AID value is used to indicate that a corresponding resource is the resource allocated to the unassociated station. After the AP receives the association request frame and responds a block response frame (Block ACK, BA for short), the AP may send an association response frame to the unassociated station when competing for a channel is successful.

Since the AP has not assigned the AID to the unassociated STA before sending the association response frame, the AP cannot efficiently send the association response frame to a plurality of unassociated stations simultaneously in a downlink multi-user transmission manner. Although the AP may still use Enhanced Distributed Channel Access (EDCA) to compete for a channel successfully and then sequentially send the association response frame in a unicast manner to each station, the transmission efficiency is not high. Therefore, how to efficiently send the association response frame to a plurality of unassociated stations by the AP is a problem to be solved. Similarly, for a plurality of associated stations, in the case of sending a general broadcast service request frame, the access point also needs to compete for a channel for a plurality of times to send a broadcast service response frame to each station in a unicast manner, which also has a problem of low transmission efficiency.

**SUMMARY**

A method and a device for radio frame transmission are provided to improve transmission efficiency.

Provided is a method for radio frame transmission, applied to a communication station, including: receiving a request frame sent simultaneously or in a time-sharing manner by at least one station; and sending a broadcast response frame to the at least one station.

Optionally, the at least one station sending a request frame simultaneously refers to that the at least one station sends the request frame in an uplink frequency division multiple access manner; and the at least one station sending a request frame in a time-sharing manner refers to that the at least one station sends the request frame in a unicast manner after competing for a channel, or a plurality of stations send the request frame in an uplink frequency division multiple access manner in a time-sharing manner.

Optionally, the broadcast response frame includes common information and/or station-specific information, the common information being used for indicating common system-related information to each station being responded to, and the station-specific information being used for indicating to an individual station information related to the station.

Optionally, the common information and the station-specific information includes one or more of: response frame type, status code, station identifier, association identifier, resource allocation, length indication, association identifier offset, association identifier bitmap, general service delay, query response, broadcast protocol information element, or information element for notifying management message.

Optionally, the information element for notifying management message includes one or more of: supported rate, enhanced distributed channel access parameter set, coexistence information of basic service set, operation information, maximum idle period of basic service set, quality of service mapping, neighbor report, or operation mode notification.

Optionally, the association identifier is used for indicating an association identifier assigned to a station identified by the station identifier.

Optionally, the resource allocation is used for indicating a channel resource allocated for scheduling an uplink transmission of a station identified by the station identifier.

Optionally, in a case where the common information or the station-specific information includes an information element, the information element appears after non-information element information.

Optionally, a transmitting address of the broadcast response frame is set as an identifier of an access point or a service set identifier.

Optionally, in a case where the plurality of stations support a multiple basic service set identifier or the plurality of stations belong to different basic service sets, a transmitting address of the broadcast response frame is set as a transmitted service set identifier.

Optionally, in a case where a multiple basic service set identifier is supported and a value of a transmitted service set identifier having been received by the at least one station is known, a transmitting address field of the broadcast response frame is set as the transmitted service set identifier.

Optionally, in a case where a multiple basic service set identifier is supported and whether the at least one station has received a value of a transmitted service set identifier is not known, the plurality of stations are grouped according to a value of a receiving address of the request frame, wherein stations with a same value of the receiving address are grouped into a same group, and the broadcast response frame is respectively sent by group, a transmitting address field of the broadcast response frame being set as the value of the receiving address of the request frame.

Optionally, the value of the transmitted service set identifier having been received by the at least one station is known by following manners: carrying, by the request frame, an indication of capability of a station supporting the multiple basic service set; or receiving a beacon frame which is reported by a station that the station has received an information element containing the multiple basic service set identifier, and identifying an indication of the value of the transmitted service set identifier; or triggering, by a trigger frame with a transmitting address field having the value of the transmitted service set identifier, the request frame to be sent in an uplink frequency division multiple access manner; or a receiving address of the request frame being the same as the value of the transmitted service set identifier.

Provided is a device for radio frame transmission, including: a receiving module configured to receive a request frames sent simultaneously or in a time-sharing manner by at least one station; and a sending module configured to send a broadcast response frame to the at least one station.

Optionally, the one or more stations sending a request frame simultaneously refers to that the at least one station sends the request frame in an uplink frequency division multiple access manner; and the at least one station sending a request frame in a time-sharing manner refers to that the at least one station sends the request frame in a unicast manner after competing for a channel, or a plurality of stations send the request frame in an uplink frequency division multiple access manner in a time-sharing manner.

Optionally, the broadcast response frame includes common information and/or station-specific information, the common information being used for indicating common system-related information to each station being responded to, and the station-specific information being used for indicating to an individual station information related to the station; the common information and the station-specific information includes one or more of: response frame type, status code, station identifier, association identifier, resource allocation, length indication, association identifier offset, association identifier bitmap, general service delay, query response, broadcast protocol information element, or information element for notifying management message; and the information element for notifying management message includes one or more of: supported rate, enhanced distributed channel access parameter set, coexistence information of basic service set, operation information, maximum idle period of basic service set, quality of service mapping, neighbor report, or operation mode notification.

Optionally, the device further includes a setting module configured to set a transmitting address of the broadcast response frame as an identifier of an access point or a service set identifier.

Optionally, the device further includes: a setting module configured to set a transmitting address of the broadcast response frame as a transmitted service set identifier, in a case where the plurality of stations support a multiple basic service set identifier or the plurality of stations belong to different basic service sets.

Optionally, the device further includes a setting module configured to set a transmitting address field of the broadcast response frame as a transmitted service set identifier, in a case where a multiple basic service set identifier is supported and a value of the transmitted service set identifier having been received by the at least one station is known

Optionally, the device further includes a setting module configured to group the plurality of stations according to a value of a receiving address of the request frame, in a case where a multiple basic service set identifier is supported and whether the at least one station has received a value of a transmitted service set identifier is not known, wherein stations with a same value of the receiving address are grouped into a same group, and the broadcast response frame is respectively sent by group, a transmitting address field of the broadcast response frame being set as the value of the receiving address of the request frame.

Provided is a device for radio frame transmission, including a memory and a processor, wherein the memory is configured to store following instructions: receiving a request frame sent simultaneously or in a time-sharing manner by at least one station; and sending a broadcast response frame to the at least one station; and the processor is configured to execute instructions stored in the memory.

Provided is a method for radio frame transmission, applied to a communication station, including: receiving, by a station, a broadcast response frame, and parsing the broadcast response frame; and acquiring information related to the station from the broadcast response frame.

Optionally, before the receiving, by the station, the broadcast response frame, the method further includes: sending a request frame in a competitive manner to a sending station from which the broadcast response frame is sent; or sending a request frame in an uplink frequency division multiple access manner to a sending station from which the broadcast response frame is sent after receiving a trigger frame or a scheduling frame sent from the sending station, wherein a transmitting address of the trigger frame or the scheduling frame is a service set identifier or a medium access control address transmitted from an access point to be associated or an associated access point.

Optionally, the request frame carries capability information of supporting a multiple basic service set, or a receiving address of the request frame is set as a transmitted service set identifier.

Optionally, the parsing the broadcast response frame includes: parsing, by the station, a medium access control address or a value of a service set identifier set in a transmitting address field of the broadcast response frame, and determining, by the station, whether the broadcast response frame is from an access point requested to be associated or an associated access point.

Optionally, the parsing the broadcast response frame further includes: determining, according to a type field and/or a subtype field of the broadcast response frame, a type of the broadcast response frame to be a broadcast association response frame, a broadcast probe response frame, or a general broadcast service response frame.

Optionally, before the acquiring the information related to the station from the broadcast response frame, the method further includes: determining that a station identifier carried in the broadcast response frame is the same as a station identifier of the station or a station identifier carried in the broadcast response frame is matched with a media control access address of the station.

Optionally, the acquiring the information related to the station from the broadcast response frame includes: in a case where the broadcast response frame is a broadcast association response frame, judging whether an association between the station and a corresponding access point is successful or not according to a value of a status code, and in response to judging that the association is successful, reading a value of an association identifier indicated by the broadcast association response frame and taking the value of the association identifier as an association identifier associated with the access point; in a case where the broadcast response frame is a general broadcast service response frame, judging whether a general broadcast service request sent by the station is successful or not according to a value of a status code, and reading a broadcast protocol information element or query response information in response to judging that the general broadcast service request is successful.

Provided is a device for radio frame transmission, including: a parsing module configured to receive a broadcast response frame and parse the broadcast response frame; and an acquisition module configured to acquire information related to a station from the broadcast response frame.

Optionally, the device further includes a sending module configured to send a request frame in a competitive manner to a sending station from which the broadcast response frame is sent before a receiving module receives the broadcast response frame, wherein the request frame carries capability information of supporting a multiple basic service set, or a receiving address of the request frame is set as a transmitted service set identifier.

Optionally, the device further includes: a sending module, a receiving module configured to receive a trigger frame or a scheduling frame sent from a sending station from which the broadcast response frame is sent, wherein a transmitting address of the trigger frame or the scheduling frame is a service set identifier or a medium access control address transmitted from an access point to be associated or an associated access point; and the sending module is configured to send a request frame to the sending station in an uplink frequency division multiple access manner.

Optionally, the parsing module parsing the broadcast response frame includes: parsing a medium access control address or a value of a service set identifier set in a transmitting address field of the broadcast response frame, and determining, by the station, whether the broadcast response frame is from an access point requested to be associated or an associated access point.

Optionally, the parsing module parsing the broadcast response frame further includes: determining, according to a type field and/or a subtype field of the broadcast response frame, a type of the broadcast response frame to be a broadcast association response frame, a broadcast probe response frame, or a general broadcast service response frame.

Optionally, the device further includes a determination module configured to determine that a station identifier carried in the broadcast response frame is the same as a station identifier of the station or a station identifier carried in the broadcast response frame is matched with a media control access address of the station.

Optionally, the acquisition module is configured to: in a case where the broadcast response frame is a broadcast association response frame, judge whether an association between the station and a corresponding access point is successful or not according to a value of a status code, and in response to judging that the association is successful, read a value of an association identifier indicated by the broadcast association response frame and take the value of the association identifier as an association identifier associated with the access point; in a case where the broadcast response frame is a general broadcast service response frame, judge whether a general broadcast service request sent by the station is successful or not according to a value of a status code, and read a broadcast protocol information element or query response information in response to judging that the general broadcast service request is successful.

Provided is a device for radio frame transmission, including a memory and a processor, wherein the memory stores following instructions: receiving a broadcast response frame, and parsing the broadcast response frame; and acquiring information related to a station from the broadcast response frame; and the processor is configured to execute instructions stored in the memory.

According to another embodiment of the present disclosure, provided is a storage medium having stored therein a computer program, wherein the computer program is configured to perform, when executed, steps of the method of any one of the above method embodiments.

According to another embodiment of the present disclosure, provided is an electronic device including a memory having a computer program stored therein and a processor configured to run the computer program to perform steps of the method of any one of the above method embodiments.

To sum up, embodiments of the present disclosure provide a method and a device for radio frame transmission, and can improve transmission efficiency.

## BRIEF DESCRIPTION OF THE DRAWINGS

Fig. 1 is a flowchart illustrating a method for radio frame transmission according to a first embodiment of the present disclosure;
Fig. 2 is a flowchart illustrating a method for radio frame transmission according to a second embodiment of the present disclosure;
Fig. 3 is a schematic diagram illustrating a frame body of a broadcast association response frame according to a third embodiment of the present disclosure;
Fig. 4 is a schematic diagram illustrating a common information field according to the third embodiment of the present disclosure;
Fig. 5 is a schematic diagram illustrating a station-specific information field according to the third embodiment of the present disclosure;
Fig. 6 is a schematic diagram illustrating the setting of a station-specific information field according to the third embodiment of the present disclosure;
Fig. 7 is a schematic diagram illustrating a frame body of a broadcast association response frame according to a fourth embodiment of the present disclosure;
Fig. 8 is a schematic diagram illustrating the setting of a station-specific information field according to a fifth embodiment of the present disclosure;
Fig. 9 is a schematic diagram illustrating a station-specific information field according to a sixth embodiment of the present disclosure;
Fig. 10 is a schematic diagram illustrating a station-specific information field according to a seventh embodiment of the present disclosure;
Fig. 11 is a timing diagram according to the seventh embodiment of the present disclosure;
Fig. 12 is a schematic diagram illustrating a format of a frame body according to a ninth embodiment of the present disclosure;
Fig. 13 is a schematic diagram illustrating a mapping relationship according to the ninth embodiment of the present disclosure;
Fig. 14 is a schematic diagram illustrating a device for radio frame transmission according to a twelfth embodiment of the present disclosure; and
Fig. 15 is a schematic diagram illustrating a device for radio frame transmission according to a thirteenth embodiment of the present disclosure.

## DETAILED DESCRIPTION

In order to make the objects, technical solutions and advantages of the present disclosure more apparent, embodiments of the present disclosure will be described in detail below with reference to the accompanying drawings. It should be noted that the embodiments and the features in the embodiments in the present disclosure can be arbitrarily combined with each other without conflict.

First Embodiment

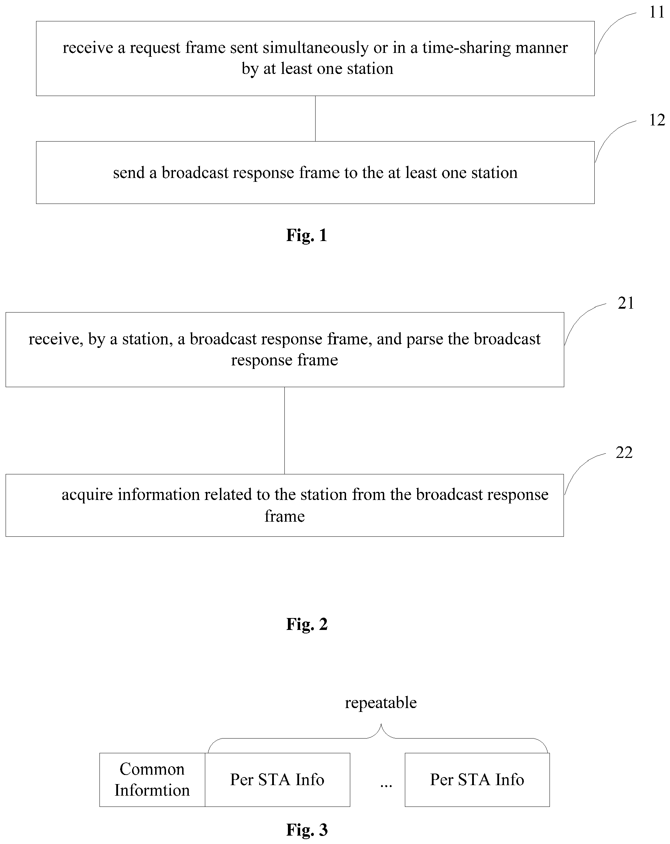

Fig. 1 is a flowchart illustrating a method for radio frame transmission according to an embodiment of the present disclosure, and as shown in Fig. 1, the method according to the present embodiment includes the following steps: Step 11, receiving a request frame sent simultaneously or in a time-sharing manner by at least one station; and Step 12, sending a broadcast response frame to the at least one station.

The access point of the present embodiment can send the response frame to a plurality of stations at the same time, and can effectively improve the transmission efficiency.

In an embodiment, the at least one station sending the request frame simultaneously refers to that the at least one station sends the request frame in an uplink frequency division multiple access manner; and the at least one station sending the request frame in the time-sharing manner refers to that the at least one station sends the request frame in a unicast manner after competing for a channel or a plurality of stations send the request frame in an uplink frequency division multiple access manner in a time-sharing manner.

The broadcast response frame includes common information and/or station-specific information. The common information is used for indicating common system-related information to each of the stations being responded to, and the station-specific information is used for indicating to an individual station information related to the station.

In an embodiment, the common information and the station-specific information may include one or more of the following information: response frame type, status code, station identifier, association identifier, resource allocation, length indication, association identifier offset, association identifier bitmap, general service delay, query response, broadcast protocol information element, or information element for notifying management message.

Among the above information, information not divided into the common information may be divided into the station-specific information.

The association identifier is used for indicating an association identifier assigned to a station identified by the station identifier.

The resource allocation is used for indicating a channel resource allocated for scheduling an uplink transmission of a station identified by the station identifier.

The information element for notifying management message includes one or more of the following: supported rate, EDCA parameter set, coexistence information of basic service set, operation information, maximum idle period of basic service set, quality of service mapping, neighbor report, or operation mode notification.

In an embodiment, when the common information field or the station-specific information field includes an information element, the information element appears after non-information element information.

In an embodiment, a transmitting address of the broadcast response frame may be set as an identifier of an access point or a service set identifier.

In an embodiment, in a case where the plurality of stations support a multiple basic service set identifier or the plurality of stations belong to different basic service sets, a transmitting address of the broadcast response frame is set as a transmitted service set identifier.

In a case where a multiple basic service set identifier is supported and a value of a transmitted service set identifier having been received by the at least one station is known, a transmitting address field of the broadcast response frame is set as the transmitted service set identifier.

In a case where a multiple basic service set identifier is supported and whether the at least one station has received a value of a transmitted service set identifier is not known, the plurality of stations are grouped according to a value of a receiving address of the request frame, wherein stations with a same value of the receiving address are grouped into a same group, and the broadcast response frame is respectively sent by group, a transmitting address field of the broadcast response frame being set as the value of the receiving address of the request frame.

The value of the transmitted service set identifier having been received by the plurality of stations may be known by the following manner: carrying, by the request frame, an indication of capability of a station supporting the multiple basic service set; or receiving a beacon frame which is reported by a station that the station has received an information element containing the multiple basic service set identifier, and identifying an indication of the value of the transmitted service set identifier; or triggering, by a trigger frame with a transmitting address field having the value of the transmitted service set identifier, the request frame to be sent in an uplink frequency division multiple access manner; or a receiving address of the request frame being the same as the value of the transmitted service set identifier.

Second Embodiment

Fig. 2 is a flowchart illustrating a method for radio frame transmission according to an embodiment of the present disclosure, and as shown in Fig. 2, the method according to the present embodiment includes the following steps: Step 21, receiving, by a station, a broadcast response frame, and parsing the broadcast response frame; and Step 22, acquiring information related to the station from the broadcast response frame.

In the present embodiment, a plurality of stations may acquire respective information from the received broadcast response frame, thereby effectively improving transmission efficiency.

In an embodiment, before the receiving, by the station, the broadcast response frame, the method further includes: sending a request frame in a competitive manner to a sending station from which the broadcast response frame is sent; or sending a request frame in an uplink frequency division multiple access manner to a sending station from which the broadcast response frame is sent after receiving a trigger frame or a scheduling frame sent from the sending station, wherein a transmitting address of the trigger frame or the scheduling frame is a service set identifier or a medium access control address transmitted from an access point to be associated or an associated access point.

The request frame carries capability information of supporting a multiple basic service set, or a receiving address of the request frame is set as a transmitted service set identifier.

In an embodiment, the parsing the broadcast response frame includes: parsing, by the station, a medium access control address or a value of a service set identifier set in a transmitting address field of the broadcast response frame, and determining, by the station, whether the broadcast response frame is from an access point requested to be associated or an associated access point.

In an embodiment, the parsing the broadcast response frame further includes: determining, according to a type field and/or a subtype field of the broadcast response frame, a type of the broadcast response frame to be a broadcast association response frame, a broadcast probe response frame, or a general broadcast service response frame.

In an embodiment, before the acquiring the information related to the station from the broadcast response frame, the method further includes: determining that a station identifier carried in the broadcast response frame is the same as a station identifier of the station or a station identifier carried in the broadcast response frame is matched with a media control access address of the station.

In an embodiment, the acquiring the information related to the station from the broadcast response frame includes: in a case where the broadcast response frame is a broadcast association response frame, judging whether an association between the station and a corresponding access point is successful or not according to a value of a status code, and when it is judged that the association is successful, reading a value of an association identifier indicated by the broadcast association response frame and taking the value of the association identifier as an association identifier associated with the access point; and in a case where the broadcast response frame is a general broadcast service response frame, judging whether a general broadcast service request sent by the station is successful or not according to a value of a status code, and reading a broadcast protocol information element or query response information when it is judged that the general broadcast service request is successful.

In the current WLAN technology, an AP is allowed to use a trigger frame to trigger an unassociated station to send an association request frame in an uplink frequency division multiple access manner, where the AP uses an AID with a specific value in the trigger frame to indicate that a corresponding channel resource is an uplink random access channel resource allocated to the unassociated station, and after responding an acknowledgement frame, the AP may send an association response frame to the unassociated station when competing for a channel is successful. Since the unassociated station is not assigned with AID before the association response frame is sent, and the AP needs to assign channels or sub-channels for corresponding stations using AID values when sending the association response frame to a plurality of unassociated stations using DL OFDMA, the AP cannot efficiently send the association response frame to the plurality of unassociated stations simultaneously using DL OFDMA. Although the AP may still send the association response frame to each station in a unicast manner using the conventional EDCA manner, the transmission efficiency is not high. Therefore, how to efficiently send the association response frame to the plurality of unassociated stations by the AP is a problem to be solved.

The following third to ninth embodiments are described in detail on how to improve transmission efficiency with respect to the unassociated stations.

Third Embodiment

In a wireless local area network, there are an access point AP and three STAs that are not associated with the AP: STA 1, STA 2, and STA 3. The MAC (media access control) addresses corresponding to the STA 1, the STA 2, and the STA 3 are A1, A2, and A3, respectively.

The STA 1, the STA 2, and the STA 3 request to associate with the AP by sending an association request frame, and the manner in which a station sends an association request may be a unicast manner or an uplink frequency division multiple access manner, and is not limited to these two manners.

After receiving the association request frame and acquiring the MAC address of the station from the request frame, the AP replies with an acknowledgement frame (ACK/BA frame), and then competes for a channel through EDCA, and sends a broadcast association response frame to the STA 1, the STA 2, and the STA 3 through all or part of the channels for which the competition is successful.

The frame body portion of the broadcast association response frame contains a common information field and a station-specific information (Per STA Info) field, as shown in Fig. 3. The common information field is used for indicating information such as system-related information to each station being responded to; the station-specific information field is used for indicating to an individual station the association-related information, and the station-specific information field may be repeated.

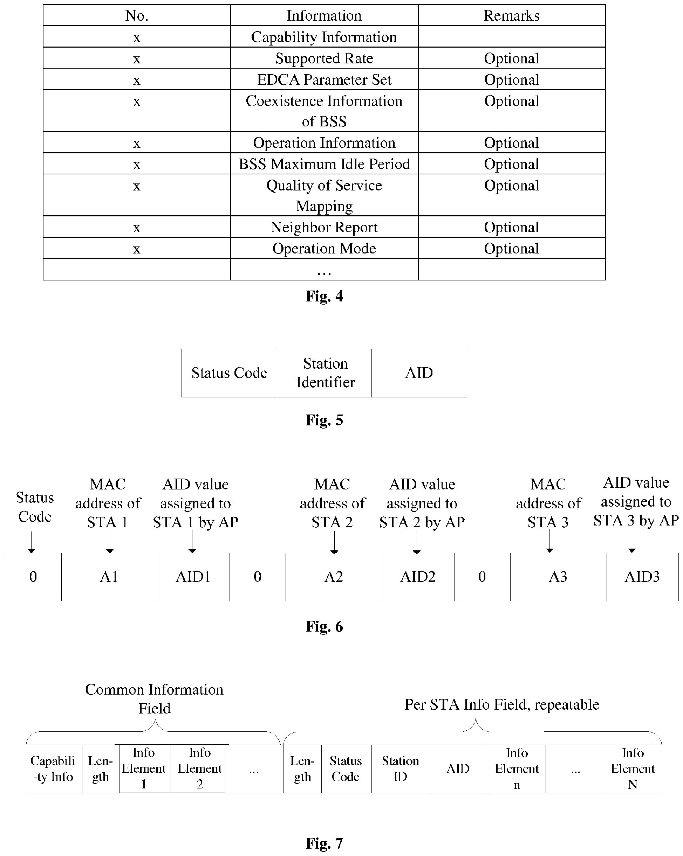

The common information field contains a capability information sub-field and optionally one or more information elements. The one or more information elements may include: supported rate, EDCA parameter set, coexistence information of BSS (Basic Service Set), operation information, BSS maximum idle period, quality of service mapping, neighbor report, operation mode notification, etc., as shown in Fig. 4. The AP may also include a length sub-field in the common information field to indicate the total number of bytes of the common information field.

The station-specific information field may include: a status code field, a station identifier field, and an AID field, as shown in Fig. 5. The status code field is used for indicating whether the association request of the station is successfully accepted or not and indicating the specific reason causing failure when the association request is failed; the station identifier field is set as an identifier of a station sending the association request, for example, as the value of the MAC address of the station; the AID field is used for indicating an association identifier AID value assigned by the AP to the station identified by the station identifier field.

In the present embodiment, the AP sends the broadcast association response frame to the STA 1, the STA 2, and the STA 3, wherein the station-specific information fields are as shown in Fig. 6, wherein the AP sets the status code to 0, that is, indicates that the association is successful, and the AIDs assigned to the STA 1, the STA 2, and the STA 3 with the respective MAC addresses of A1, A2, and A3 are AID 1, AID 2, and AID 3, respectively.

The STA 1, the STA 2 and the STA 3 receive the broadcast association response frame, acquire that a sender of the association response frame is the AP which is requested to be associated by parsing the MAC address, or service set identifier value, or other information set in the transmitting address field of the broadcast association response frame, and identify the broadcast association response frame as a broadcasted association response frame in the following manner: the type and subtype fields of the response frame indicate the response frame as the broadcast association response frame, or the type and subtype fields of the response frame indicate the response frame as an association response frame, and the MAC address is set as a broadcast address.

The STA 1, the STA 2 and the STA 3 each parses the common information field and the station-specific information fields of the broadcast association response frame, finds the station-specific information field carrying its own MAC address, acquires that the association between itself and the AP is successful according to the value of the status code, reads the AID value, and uses the AID value as the association identifier associated with the AP.

Fourth Embodiment

In a wireless local area network, there are an access point AP and three STAs that are not associated with the AP: STA 1, STA 2, and STA 3. The MAC addresses corresponding to the STA 1, the STA 2, and the STA 3 are A1, A2, and A3, respectively.

The STA 1, the STA 2 and the STA 3 send an association request frame to the AP, and the AP replies with an ACK/BA frame after receiving the association request frame and acquiring the MAC address of the station from the association request frame, and then competes for a channel through EDCA, and sends a broadcast association response frame to the STA 1, the STA 2, and the STA 3 through all or part of the channels for which the competition is successful..

The frame body portion of the broadcast association response frame contains a common information field and a station-specific information (Per STA Info) field. The common information field is used for indicating information such as system-related information to each station being responded to; the station-specific information field is used for indicating to an individual station the association-related information, and the field may be repeated. A schematic diagram of the frame body portion of the frame is shown in Fig. 7.

The broadcast association response frame may carry one or more information elements, including: supported rate, EDCA parameter set, coexistence information of BSS, operation information, BSS maximum idle period, quality of service mapping, neighbor report, operation mode notifications, etc..

Some of the information elements are optionally presented in the common information field and a remaining portion of the information elements are optionally presented in the station-specific information field, e.g., EDCA parameter set is optionally presented in the station-specific information field. The AP may include indication information in the common information field for indicating a total number of bytes of the common information field; the AP may further include indication information in the station-specific information field for indicating a total number of bytes of the station-specific information field, where the indication information may be a length field.

The station-specific information field further includes: a status code field, a station identifier field, and an AID field. The status code field is used for indicating whether the association request of the station is successfully accepted or not and indicating the specific reason causing failure when the association request is failed; the station identifier field is set as the identifier of the station sending the association request, for example, as the value of the MAC address of the station; the AID field is used for indicating an association identifier AID value assigned by the AP to the station identified by the station identifier field. When the station-specific information field further includes an information element, the information element appears after the non-information element fields such as the status code field, the station identifier field, and the AID field.

In the present embodiment, the AP sends the broadcast association response frame to the STA 1, the STA 2, and the STA 3, and the AIDs allocated to the STA 1, the STA 2, and the STA 3 with the respective MAC addresses of A1, A2, and A3 are AID 1, AID 2, and AID 3, respectively.

Upon receiving the broadcast association response frame, the STA 1, the STA 2 and the STA 3 can identify the frame as a broadcasted association response frame in the following manner: the type and subtype fields of the response frame indicate the response frame as the broadcast association response frame, or the type and subtype fields of the response frame indicate the response frame as an association response frame, and the MAC address is set as the broadcast address.

The STA 1, the STA 2 and the STA 3 each parses the common information field of the broadcast association response frame according to the length field to obtain the common information, parses the station-specific information fields to find the station-specific information field carrying its own MAC address, acquires that the association between itself and the AP is successful according to the value of the status code, reads the AID value, and uses the AID value as the association identifier associated with the AP.

Fifth Embodiment

In a wireless local area network, there are an access point AP and three STAs that are not associated with the AP: STA 1, STA 2, and STA 3. The MAC addresses corresponding to the STA 1, the STA 2, and the STA 3 are A1, A2, and A3, respectively.

The STA 1, the STA 2, and the STA 3 request to associate with the AP by sending an association request frame, and the manner in which a station sends an association request may be a unicast manner or an uplink frequency division multiple access manner, and is not limited to these two manners.

After receiving the association request frame and acquiring the MAC address of the station from the request frame, the AP replies with an ACK/BA frame, and then competes for a channel through EDCA, and sends a broadcast association response frame to the STA 1, the STA 2, and the STA 3 through all or part of the channels for which the competition is successful.

The frame body portion of the broadcast association response frame contains a common information field and a station-specific information (Per STA Info) field, as shown in Fig. 3. The common information field is used for indicating information such as system-related information to each station being responded to; the station-specific information field is used for indicating to an individual station the association-related information, and the field may be repeated.

The common information field contains a capability information sub-field and optionally one or more information elements. The one or more information elements may include: supported rate, EDCA parameter set, coexistence information of BSS, operation information, BSS maximum idle period, quality of service mapping, neighbor report, operation mode notification, etc.. The AP may also include a length sub-field in the common information field to indicate the total number of bytes of the common information field.

The station-specific information field may include: a status code field, a station identifier field, and an AID field, as shown in Fig. 5. The status coding field is used for indicating whether the association request of the station is successfully accepted or not and the specific reason causing the failure when the association request is failed; the station identifier field sets as an identifier, e.g., an MAC address, of a station sending the association request; the AID field is used for indicating an association identifier AID value assigned by the AP to the station identified by the station identifier field.

In the present embodiment, the AP sends the broadcast association response frame to the STA 1, the STA 2, and the STA 3, wherein the AP accepts the association requests of the STA 1 and the STA 2 with the respective MAC addresses of A1 and A2, and assigns AIDs of AID 1 and AID 2 to the STA 1 and STA 2, respectively; and wherein the AP rejects the association request of the STA 3 with the MAC address of A3. The setting of the station-specific information field in the broadcast association response frame is as shown in Fig. 6.

The STA 1, the STA 2 and the STA 3 receive the broadcast association response frame, identify that the frame is a broadcasted association response frame. The STA 1, the STA 2 and the STA 3 each parses the common information field of the broadcast association response frame according to the length field to acquire common information, parses the station-specific information fields, and finds the station-specific information field carrying its MAC address.

The STA 1 and the STA 2 each acquires that the association between itself and the AP is successful according to the value of the status code, reads the AID value, and uses the AID value as the association identifier associated with the AP.

When the STA 3 parses the station-specific information field matching the MAC address of the STA 3, the STA 3 acquires from the status code that the association with the AP is failed and knows the reason causing the failure of the association, and the STA 3 ignores the value of the AID field in the station-specific information field, and selects to send an association request frame to the AP again or to send an association request frame to other APs.

Sixth Embodiment

In a wireless local area network, there are an access point AP and seven STAs that are not associated with the AP: STA 1 to STA 7. The MAC addresses corresponding to the STA 1 to the STA 7 are A1 to A7, respectively.

The STA 1 to the STA 6 request to associate with the AP by sending an association request frame. After receiving the association request frame and acquiring the MAC address of the station from the request frame, the AP replies with an ACK/BA frame, and then competes for a channel through EDCA, and the AP selects to send a broadcast association response frame to the STA 1 to the STA 4 through all or part of the channels for which the competition is successful.

The frame body portion of the broadcast association response frame contains a common information field and a station-specific information (Per STA Info) field, as shown in Fig. 3. The common information field is used for indicating information such as system-related information to each station being responded to; the station-specific information field is used for indicating to an individual station the association-related information, and the field may be repeated.

The common information field contains a capability information sub-field and optionally one or more information elements. The one or more information elements may include: supported rate, EDCA parameter set, coexistence information of BSS, operation information, BSS maximum idle period, quality of service mapping, neighbor report, operation mode notifications, etc.. The AP may also include a length sub-field in the common information field to indicate the total number of bytes of the common information field.

The station-specific information field may include: a status code field, a station identifier field, and an AID field, as shown in Fig. 5. The status code field is used for indicating whether the association request of the station is successfully accepted or not and indicating the specific reason causing failure when the association request is failed; the station identifier field is set as an identifier of a station sending the association request, for example, as a MAC address or a part of the MAC address of the station; the AID field is used for indicating an association identifier AID value assigned by the AP to the station identified by the station identifier field.

After receiving the broadcast association response frame, the STA 1 to the STA 6 identify that the frame is a broadcasted association response frame, and the STA 1 to the STA 6 parse the broadcast association response frame. The STA 1 to the STA 4 find information matching their MAC addresses, and acquire whether or not they are successfully associated with the AP and assigned AID values when they are successfully associated with the AP.

When the STA 5 and the STA 6 parse the broadcast association response frame, no information matching with their MAC addresses is found. If an association validity duration timer locally maintained by the station is a non-zero value, the STA 5 and the STA 6 may choose to continue waiting for a response replied by the AP, and if the association validity duration timer locally maintained by the station is zero and an association response frame sent by the AP is still not received, the STA 5 and the STA 6 may choose to continue sending an association request frame to the AP, or choose to send an association request frame to other APs.

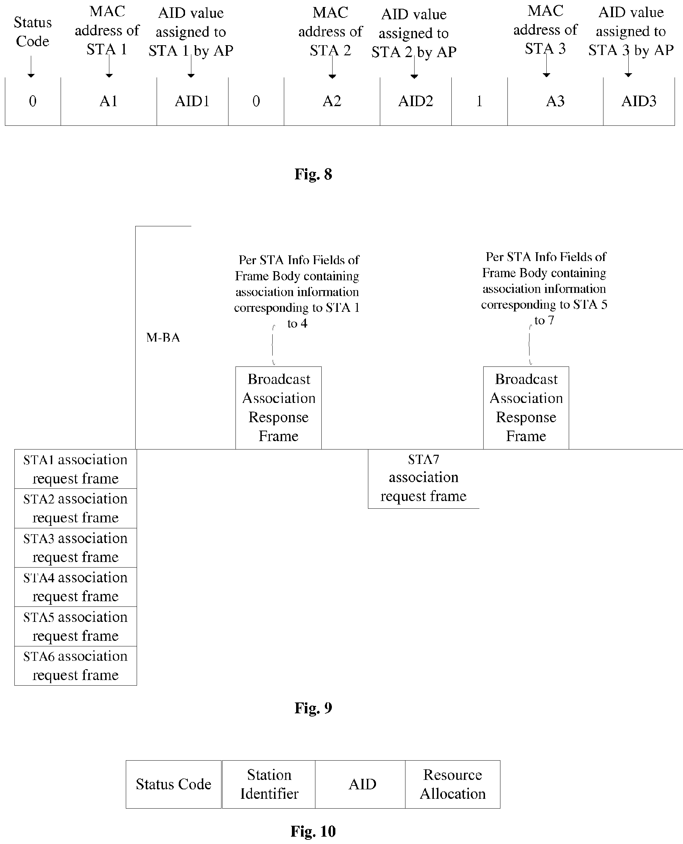

After that, the AP receives an association request frame from the STA 7, the AP again competes for a channel through EDCA, and the AP sends a broadcast association response frame again to the STA 5 to the STA 7 through all or part of the channels for which the competition is successful, as shown in Fig. 9. After receiving the frame, the STA 5 to the STA 7 identify and parse the frame, and find information matching their MAC addresses, so as to acquire whether or not they are successfully associated with the AP and assigned AID values when they successfully associate with the AP.

Seventh Embodiment

In a wireless local area network, there are an access point AP and three STAs that are not associated with the AP: STA 1, STA 2, and STA 3. The MAC addresses corresponding to the STA 1, the STA 2, and the STA 3 are A1, A2, and A3, respectively.

The STA 1, the STA 2, and the STA 3 request to associate with the AP by sending an association request frame. After receiving the association request frame and acquiring the MAC address of the station from the request frame, the AP replies with an ACK/BA frame, and then competes for a channel through EDCA, and sends a broadcast association response frame to the STA 1, the STA 2, and the STA 3 through all or part of the channels for which the competition is successful.

The frame body portion of the broadcast association response frame contains a common information field and a station-specific information (Per STA Info) field, as shown in Fig. 3. The common information field is used for indicating information such as system-related information to each station being responded to; the station-specific information field is used for indicating to an individual station the association-related information, and the field may be repeated.

The common information field contains a capability information sub-field and optionally one or more information elements. The one or more information elements may include: supported rate, EDCA parameter set, coexistence information of BSS, operation information, BSS maximum idle period, quality of service mapping, neighbor report, operation mode notification, etc.. The AP may also include a length sub-field in the common information field to indicate the total number of bytes of the common information field.

The station-specific information field may include: a status code field, a station identifier field, an AID field, and a resource allocation field, as shown in Fig. 10. The status code field is used for indicating whether the association request of the station is successfully accepted or not and indicating the specific reason causing failure when the association request is failed; the station identifier field sets as an identifier of a station sending the association request, such as a MAC address of the station; the AID field is used for indicating an association identifier AID value assigned by the AP to the station identified by the station identifier field, and the resource allocation field is used for the station to reply with an acknowledge frame through a corresponding resource after receiving the association response frame.

In the present embodiment, the AP sends the broadcast association response frame to the STA 1, the STA 2, and the STA 3, where resources scheduled for the STA 1, the STA 2, and the STA 3 to reply with the acknowledgement frame are indicated in the status code field as RU 1, RU 2, and RU 3, respectively.

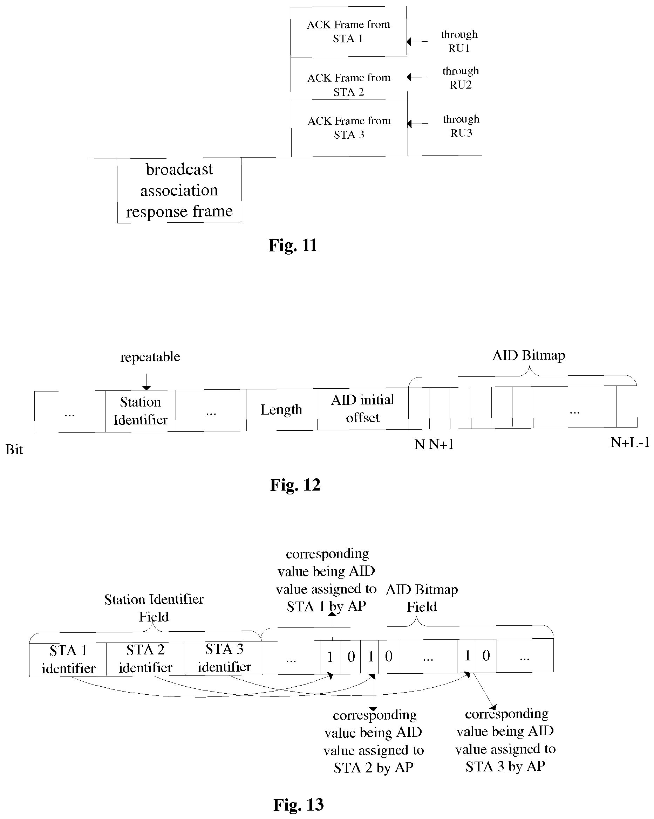

The STA 1, the STA 2 and the STA 3 receive the broadcast association response frame, identify and parse the frame, so as to acquire that whether the STA 1, the STA 2 and the STA 3 are successfully associated with the AP, and AID values assigned by the AP to the STA 1 to the STA 3 when the STA 1 to the STA 3 are successfully associated with the AP, and the STA 1 to the STA 3 acquire the channel resources scheduled by the AP for replying with the acknowledgement frame from the resource allocation field. Upon receiving the broadcast association response frame, the STA 1 to STA 3 reply with an acknowledgement frame after a fixed interframe space (e.g., SIFS) through the channel resource specified by the resource allocation sub-field in the respective station-specific information fields matching with the respective MAC addresses of the STA 1 to STA 3, and the timing diagram is shown in Fig. 11.

Eighth Embodiment

In a wireless local area network, there are an access point AP and three STAs that are not associated with the AP: STA 1, STA 2, and STA 3. The MAC addresses corresponding to the STA 1, the STA 2, and the STA 3 are A1, A2, and A3, respectively.

The STA 1, the STA 2, and the STA 3 request to associate with the AP by sending an association request frame, and the manner in which a station sends an association request may be a unicast manner or an uplink frequency division multiple access manner, and is not limited to these two manners. After receiving the association request frame and acquiring the MAC address of the station from the request frame, the AP replies with an ACK/BA frame, and then competes for a channel through EDCA, and sends a broadcast response frame to the STA 1, the STA 2, and the STA 3 through all or part of the channels for which the competition is successful.

The frame body portion of the broadcast response frame contains a response frame type field for indicating to which type of request frame the broadcast response frame is replied. In addition, the broadcast response frame may optionally have a common information field or a station-specific information field.

In the present embodiment, the AP sends the broadcast response frame to the STA 1, the STA 2, and the STA 3, and the response frame type field of the broadcast response frame indicates that the broadcast response frame is a broadcast association response frame.

The STA 1, the STA 2, and the STA 3 receive the broadcast response frame, identify and parse the frame, so as to acquire whether they are successfully associated with the AP and their AID values assigned by the AP when they are successfully associated with the AP.

Ninth Embodiment

In a wireless local area network, there are an access point AP and three STAs that are not associated with the AP: STA 1, STA 2, and STA 3. The MAC addresses corresponding to the STA 1, the STA 2, and the STA 3 are A1, A2, and A3, respectively.

The STA 1, the STA 2, and the STA 3 request to associate with the AP by sending an association request frame, and the manner in which a station sends an association request may be a unicast manner or an uplink frequency division multiple access manner, and is not limited to these two manners. After receiving the association request frame and acquiring the MAC address of the station from the request frame, the AP replies with an ACK/BA frame, and then competes for a channel through EDCA, and sends a broadcast response frame to the STA 1, the STA 2, and the STA 3 through all or part of the channels for which the competition is successful.

The frame body of the broadcast response frame carries a station identifier field, and further includes a length field, an AID initial offset field, and an AID bitmap field, as shown in Fig. 12. The length field is used for indicating the length of the AID bitmap field, e.g., L; the AID initial offset field is used for indicating an AID value corresponding to an initial bit of the AID bitmap field, for example, N; an n-th bit in the AID bitmap is set to 1 to indicate that an AID value allocated to a corresponding station is (N+n-1). The corresponding station refers to a station with which a bit is mapped, and the mapping relationship is that the bits having a value of 1 are respectively mapped with the stations identified by the station identifier fields sequentially from the lower bit to the higher bit. For example, when the AP assigns AIDs to the STA 1 to the STA 3 in the broadcast response frame, the AID values and the station identifier fields have a mapping relationship as shown in Fig. 13.

In the present embodiment, the broadcast response frame sent by the AP to the STA 1, the STA 2, and the STA 3 has the following settings of the frame body portion: the station identifier fields sequentially contain station identifiers of the STA 1 to STA 3, the length field is set to L, the AID initial offset is set to N, and the n1-th, n2-th, and n3-th bits from the lowest bit in the AID bitmap are set to 1.

The STA 1, the STA 2, and the STA 3 receive the broadcast response frame, identify that the frame is from an AP with which they have requested to associate, and parse the frame. The STA 1 parses the frame and knows that the n1-th bit in the AID bitmap, with which its own station identifier is mapped, is set to 1, and thus acquires its AID value of (N + n1-1) assigned by the AP; Likewise, the STA 2 and the STA 3 acquire their AID values of (N + n2-1) and (N + n3-1), respectively, assigned by the AP.

Tenth Embodiment

In a wireless local area network, there are an access point AP supporting a multiple service set identifier capability and eight STAs that are not associated with the AP: STA 1 to STA 8, wherein the STA 1 does not support the multiple service set identifier capability, and the STA 2 to the STA 8 all support the multiple service set identifier capability.

The AP supporting the multiple service set identifier capability refers to that the BSS in which the AP is located may be divided into a plurality of virtual BSSs, each virtual BSS corresponds to a basic service set identifier (BSSID), and a BSSID value set in a corresponding transmitting address field when the AP sends a beacon frame carrying an information element of the multiple service set identifier (Multiple BSSID) is referred to as a transmitted service set identifier, for example, the value is set to REF_BSSID. The AP indicates a value of n in the information element of the multiple service set identifier, which indicates that the value of REF_BSSID corresponds to at most 2n multiple service set identifiers, that is, corresponds to 2n virtual BSSs, and the i-th BSSID in the 2n multiple service set identifiers is calculated as follows:

$$BSSID\ (i) = BSSID\_A \mid BSSID\_B;$$

where BSSID_A is a BSSID value having higher (48-n) bits equal to higher (48-n) bits of REF_BSSID and lower n bits set to 0; BSSID_B is a BSSID value having higher (48-n) bits set to 0 and lower n bits (n LSBs) set to [(n LSBs of REF_BSSID) + i] mod2n.

In addition, the AP may also broadcast a beacon frame having a transmitting address set to a BSSID value of a non-transmitted BSSID, where the beacon frame does not contain an information element of the multiple service set identifier.

When a station receives the beacon frame containing the information element of the multiple BSSID, the value of the transmitted BSSID can be identified, and all the corresponding values of BSSIDs can be calculated through the above formula.

The STA 1 to STA 8 send association request frames to the AP by competing for a channel or by being triggered by the AP for frequency division multiple access, and the like, and the receiving address in the association request frames sent by the STA 1 to STA 3 is set to BSSID 1, the receiving address in the association request frames sent by the STA 4 and the STA 5 is set to BSSID2, and the receiving address in the association request frames sent by the STA 6 to the STA 8 is set to BSSID3.

After receiving the association request frames from the STA 1 to the STA 8, the AP finds that the values (BSSID 1 to BSSID3) set in the receiving address fields of the request frames are all included in the multiple BSSID list of its BSS, and after replying with an acknowledgement frame, the AP performs the following operations.

Case 1, when the AP acquires that the STA 1 to the STA 8 have received the beacon frame containing the information element of the multiple BSSID and identified the value of the transmitted BSSID, the AP sends a broadcast association response frame to all or part of the stations of the STA 1 to the STA 8 after competing for a channel is successful, and a transmitting address field of the broadcast association response frame is set to be the value of the transmitted BSSID.

The methods, in which the AP acquires that the STA 1 to the STA 8 have received the beacon frame containing the information element of the multiple BSSID and identified the value of the transmitted BSSID, include, but are not limited to:

a) The station reports that the station has received the beacon frame containing the information element of the multiple BSSID and identified the value of the transmitted BSSID;
b) The AP judges that the station receives the beacon frame containing the information element of the multiple BSSID by beacon frame intervals of sending the beacon frame containing the information element of the multiple BSSID by the AP, and the like;
c) The received association request frame is sent in an uplink frequency division multiple access manner triggered by a trigger frame of which the transmitting address field is set as the transmitted BSSID;
d) The station is considered to have identified the value of the transmitted BSSID, when the receiving address of the association request frame received by the AP is the same as the transmitted BSSID, and the BSSID, with which a service set identifier (SSID) carried in the frame body of the association request frame is mapped, is the same as the transmitted BSSID.

In the method d), after the station receives the beacon frame containing the information element of the multiple BSSID and identifies the transmitted BSSID, when sending the association request frame, the receiving address field is set as the transmitted BSSID no matter whether the virtual BSS corresponding to the transmitted BSSID is to be associated, and the SSID field in the association request frame is set as the SSID of the virtual BSS that the station wants to associate with. The SSID list broadcasted by the AP side is in one-to-one mapping relation with the multiple BSSID.

Case 2, when the AP cannot acquire whether the STA 1 to STA 8 have received the beacon frame containing the information element of the multiple BSSID and identified the transmitted BSSID value, the AP groups the stations according to the value of the received address field in the association request frame, that is, sets the stations with a same setting of the receiving address field when sending the association request frame as a group, sends a broadcast association response frame to all or part of the stations in a certain group according to the group after grouping, and sets the transmitting address field of the frame as the value of the receiving address in the association request frame sent by the stations in the group.

For example, in the present embodiment, after competing for a channel is successful, the AP sends a broadcast association response frame to the STA 1 to the STA 3, and the transmitting address field of the broadcast association response frame is set as BSSID 1; the AP competes for a channel again, and sends a broadcast association response frame to the STA 4 and the STA 5 after competing for the channel is successful, where the transmitting address field of the broadcast association response frame is set as BSSID2; after that, the AP competes for a channel again, and sends a broadcast association response frame to the STA 6 to the STA 8 after competing for the channel is successful, where the transmitting address field of the broadcast association response frame is set as BSSID3, and the order in which the AP sends the broadcast association response frame to the STA 1 to the STA 8 is not limited by the above-mentioned order.

In the above case 1, after receiving the broadcast association response frame, the station parses the transmitting address field of the frame, and if the value of the field is identical to the value of the BSSID transmitted from the AP with which the station is requested to associate, it determines that the frame is from the AP with which the station is requested to associate, and further parses the frame to obtain the AID value assigned to the station by the AP.

In the above case 2, when receiving the broadcast association response frame, the station parses the transmitting address field of the broadcast association response frame, and if the acquired transmitting address matches the value of the BSSID set in the receiving address field of the association request frame sent by the station, it determines that the broadcast association response frame is from the AP with which the station is requested to associate, and further parses the frame to acquire the AID value assigned to the station by the AP.

Eleventh Embodiment

In a wireless local area network, there are an STA 1, an STA 2, an STA 3, and an STA 4. The STA 4 supports the general broadcast service and informs the broadcast protocol identifier supported by its BSS through the broadcast protocol information element.

After receiving the general broadcast service requests sending from the STA 1 to STA 3, respectively, the STA 4 replies a general broadcast service response frame to the STA 1 to the STA 3, where the receiving address of the response frame is set as a broadcast address, and the frame body portion of the response frame includes a common information field and/or a station-specific information field, where the common information field and/or the station-specific information field may include the following information: status code, general service delay, broadcast protocol information element, query response, etc.. When the station-specific information field exists, the station-specific information field may further include a station identifier field for indicating a station corresponding to the station-specific information field. The value of the station identifier field may be a MAC address of the station or a station association identifier, etc., and may be used for identifying the station.

After receiving the response frame, the STA 1 to the STA 3 identify that the frame is a general broadcast service response frame, and when the identifier of the STA matches the station identifier field of the station-specific information field, read the values of the other fields in each information field.

Twelfth Embodiment

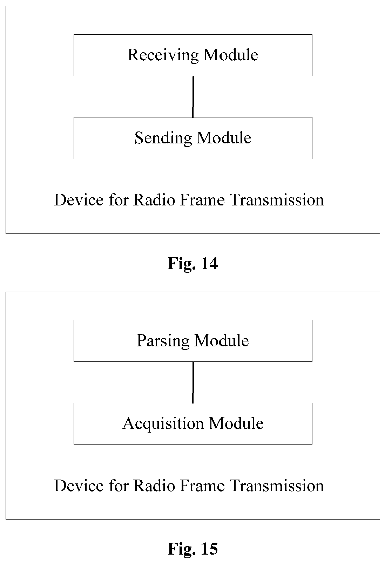

Fig. 14 is a schematic diagram illustrating a device for radio frame transmission according to an embodiment of the present disclosure, as shown in Fig. 14, the device of the present embodiment includes: a receiving module configured to receive a request frame sent simultaneously or in a time-sharing manner by at least one station; and a sending module configured to send a broadcast response frame to the at least one station.

The at least one station simultaneously sending the request frame refers to that the at least one station sends the request frame in an uplink frequency division multiple access manner; and the at least one station sending the request frame in the time-sharing manner refers to that the at least one station sends the request frame in a unicast manner after competing for a channel successfully or a plurality of stations send the request frame in an uplink frequency division multiple access manner in a time-sharing manner.

In an embodiment, the broadcast response frame includes common information and/or station-specific information. The common information is used for indicating common system-related information to each of the stations being responded to, and the station-specific information is used for indicating to an individual station information related to the station.

The common information and the station-specific information include one or more of the following information: response frame type, status code, station identifier, association identifier, resource allocation, length indication, association identifier offset, association identifier bitmap, general service delay, query response, broadcast protocol information element or information element for notifying management message,

The information element for notifying management message includes one or more of the following: supported rate, EDCA parameter set, coexistence information of basic service set, operation information, maximum idle period of basic service set, quality of service mapping, neighbor report, or operation mode notification.

In an embodiment, the device may further include: a setting module configured to set a transmitting address of the broadcast response frame as an identifier of an access point or a service set identifier.

In an embodiment, the device may further include: a setting module configured to set a transmitting address of the broadcast response frame as a transmitted service set identifier when the plurality of stations support a multiple basic service set identifier or the plurality of stations belong to different basic service sets.

In an embodiment, the device may further include: a setting module configured to set a transmitting address field of the broadcast response frame as a transmitted service set identifier when the multiple basic service set identifier is supported and a value of the transmitted service set identifier having been received by the stations is known

In an embodiment, the device may further include: a setting module configured to group the plurality of stations according to a value of a receiving address of the request frame when the multiple basic service set identifier is supported and whether the stations have received the value of the transmitted service set identifier is not known, wherein the stations with a same value of the receiving address are grouped into the same group, the broadcast response frame is respectively sent according to the groups, and a transmitting address field of the broadcast response frame is set as the value of the receiving address of the request frame.

The embodiment of the present disclosure also provides a device for radio frame transmission, which includes a memory and a processor, wherein, the memory is configured to store the following instructions: receiving a request frame sent simultaneously or in a time-sharing manner by at least one station; and sending a broadcast response frame to the at least one station; and the processor is configured to execute instructions stored in the memory.

Thirteenth Embodiment

Fig. 15 is a schematic diagram illustrating a device for radio frame transmission according to an embodiment of the present disclosure, as shown in Fig. 15, the device of the present embodiment includes: a parsing module configured to receive a broadcast response frame and parse the broadcast response frame; and an acquisition module configured to acquire information related to the station from the broadcast response frame.

In an embodiment, the device further includes:

a sending module configured to send a request frame in a competitive manner to a sending station from which the broadcast response frame is sent before a receiving module receives the broadcast response frame, the request frame carrying capability information of supporting a multiple basic service set, or a receiving address of the request frame being set as a transmitted service set identifier

In an embodiment, the device further includes: a sending module, and the receiving module configured to receive a trigger frame or a scheduling frame sent from a sending station from which the broadcast response frame is sent, where a transmitting address of the trigger frame or the scheduling frame is a service set identifier or a medium access control address transmitted from an access point to be associated or an associated access point; and the sending module is configured to send a request frame in an uplink frequency division multiple access manner to the sending station from which the broadcast response frame is sent.

In an embodiment, the parsing module parsing the broadcast response frame includes: parsing a medium access control address or a value of a service set identifier set in a transmitting address field of the broadcast response frame, and determining whether the broadcast response frame is from an access point requested to be associated or an associated access point.

In an embodiment, the parsing module parsing the broadcast response frame further includes: determining, according to a type field and/or a subtype field of the broadcast response frame, a type of the broadcast response frame to be a broadcast association response frame, a broadcast probe response frame, or a general broadcast service response frame.

In an embodiment, the device may further include: a determination module configured to determine that a station identifier carried in the broadcast response frame is the same as a station identifier of the station or a station identifier carried in the broadcast response frame is matched with a media control access address of the station.

In an embodiment, when the broadcast response frame is a broadcast association response frame, the acquisition module is configured to judge whether an association between the station and a corresponding access point is successful or not according to a value of a status code, and when it is judged that the association is successful, read a value of an association identifier indicated by the broadcast association response frame and take the value of the association identifier as an association identifier associated with the access point; and when the broadcast response frame is a general broadcast service response frame, the acquisition module is configured to judge whether a general broadcast service request sent by the station is successful or not according to a value of a status code, and read a broadcast protocol information element or query response information when it is judged that the general broadcast service request is successful.

An embodiment of the present disclosure also provides a device for radio frame transmission, which includes a memory and a processor, wherein, the memory is configured to store the following instructions: receiving a broadcast response frame, and parsing the broadcast response frame; and acquiring information related to the station from the broadcast response frame; and the processor is configured to execute instructions stored in the memory.

Embodiments of the present disclosure also provide a computer-readable storage medium having stored therein computer-executable instructions that, when executed, implement the method for radio frame transmission.

Embodiments of the present disclosure also provide an electronic device including a memory having a computer program stored therein and a processor configured to run the computer program to perform the steps of any of the method embodiments described above.

Optionally, the electronic device may further include a transmission device and an input/output device, wherein the transmission device is connected to the processor, and the input/output device is connected to the processor.

Those of ordinary skill in the art will appreciate that all or part of the steps of the above-described methods can be performed by a program that is stored on a computer-readable storage medium, such as a read-only memory, magnetic or optical disk, or the like, to instruct associated hardware. Alternatively, all or part of the steps of the above-described embodiments may be implemented using one or more integrated circuits. Accordingly, each module/unit in the above embodiments may be implemented in the form of hardware, or may be implemented in the form of a software functional module. The disclosure is not limited to any specific form of combination of hardware and software.

The above is only a preferred embodiment of the present disclosure, and the present disclosure may have other various embodiments, and those skilled in the art will be able to make various changes and modifications according to the present disclosure without departing from the spirit and the essence of the present disclosure, and these changes and modifications shall be within the scope of the appended claims.

## Industrial applicability

As described above, the method and device for radio frame transmission provided by the embodiments of the present disclosure have the following advantages: the access point of the embodiment of the present disclosure can simultaneously send the response frame to a plurality of stations, thereby effectively improving the transmission efficiency.

## Claims

1. A method for radio frame transmission, applied to a communication station, comprising:

   receiving a request frame sent simultaneously or in a time-sharing manner by at least one station; and
   sending a broadcast response frame to the at least one station.

2. The method of claim 1, wherein
   the at least one station sending a request frame simultaneously refers to that the at least one station sends the request frame in an uplink frequency division multiple access manner; and
   the at least one station sending a request frame in a time-sharing manner refers to that the at least one station sends the request frame in a unicast manner after competing for a channel, or a plurality of stations send the request frame in an uplink frequency division multiple access manner in a time-sharing manner.

3. The method of claim 1, wherein
   the broadcast response frame comprises common information and/or station-specific information, the common information being used for indicating common system-related information to each station being responded to, and the station-specific information being used for indicating to an individual station information related to the station.

4. The method of claim 3, wherein the common information and the station-specific information comprises one or more of:
   response frame type, status code, station identifier, association identifier, resource allocation, length indication, association identifier offset, association identifier bitmap, general service delay, query response, broadcast protocol information element, or information element for notifying management message.

5. The method of claim 4, wherein the information element for notifying management message comprises one or more of:
   supported rate, enhanced distributed channel access parameter set, coexistence information of basic service set, operation information, maximum idle period of basic service set, quality of service mapping, neighbor report, or operation mode notification.

6. The method of claim 4, wherein
   the association identifier is used for indicating an association identifier assigned to a station identified by the station identifier.

**7.** The method of claim 4, wherein
the resource allocation is used for indicating a channel resource allocated for scheduling an uplink transmission of a station identified by the station identifier.

**8.** The method of claim 3, wherein
in a case where the common information or the station-specific information comprises an information element, the information element appears after non-information element information.

**9.** The method of any one of claims 1 to 8, wherein
a transmitting address of the broadcast response frame is set as an identifier of an access point or a service set identifier.

**10.** The method of any one of claims 1 to 8, wherein
in a case where a plurality of stations support a multiple basic service set identifier or the plurality of stations belong to different basic service sets, a transmitting address of the broadcast response frame is set as a transmitted service set identifier.

**11.** The method of any one of claims 1 to 8, wherein
in a case where a multiple basic service set identifier is supported and a value of a transmitted service set identifier having been received by the at least one station is known, a transmitting address field of the broadcast response frame is set as the transmitted service set identifier.

**12.** The method of any one of claims 1 to 8, wherein
in a case where a multiple basic service set identifier is supported and whether the at least one station has received a value of a transmitted service set identifier is not known, a plurality of stations are grouped according to a value of a receiving address of the request frame, wherein stations with a same value of the receiving address are grouped into a same group, and the broadcast response frame is respectively sent by group, a transmitting address field of the broadcast response frame being set as the value of the receiving address of the request frame.

**13.** The method of claim 11, wherein the value of the transmitted service set identifier having been received by the at least one station is known by following manners:

carrying, by the request frame, an indication of capability of a station supporting the multiple basic service set; or
receiving a beacon frame which is reported by a station that the station has received an information element containing the multiple basic service set identifier, and identifying an indication of the value of the transmitted service set identifier; or

triggering, by a trigger frame with a transmitting address field having the value of the transmitted service set identifier, the request frame to be sent in an uplink frequency division multiple access manner; or
a receiving address of the request frame being the same as the value of the transmitted service set identifier.

**14.** A device for radio frame transmission, comprising:

a receiving module configured to receive a request frames sent simultaneously or in a time-sharing manner by at least one station; and
a sending module configured to send a broadcast response frame to the at least one station.

**15.** The device of claim 14, wherein
the one or more stations sending a request frame simultaneously refers to that the at least one station sends the request frame in an uplink frequency division multiple access manner; and
the at least one station sending a request frame in a time-sharing manner refers to that the at least one station sends the request frame in a unicast manner after competing for a channel, or a plurality of stations send the request frame in an uplink frequency division multiple access manner in a time-sharing manner.

**16.** The device of claim 14, wherein
the broadcast response frame comprises common information and/or station-specific information, the common information being used for indicating common system-related information to each station being responded to, and the station-specific information being used for indicating to an individual station information related to the station;
the common information and the station-specific information comprises one or more of: response frame type, status code, station identifier, association identifier, resource allocation, length indication, association identifier offset, association identifier bitmap, general service delay, query response, broadcast protocol information element, or information element for notifying management message; and
the information element for notifying management message comprises one or more of: supported rate, enhanced distributed channel access parameter set, coexistence information of basic service set, operation information, maximum idle period of basic service set, quality of service mapping, neighbor report, or operation mode notification.

**17.** The device of any one of claims 14 to 16, wherein
the device further comprises:
a setting module configured to set a transmitting address of the broadcast response frame as an identifier of an access point or a service set identifier.

18. The device of any one of claims 14 to 16, wherein the device further comprises:
a setting module configured to set a transmitting address of the broadcast response frame as a transmitted service set identifier, in a case where the plurality of stations support a multiple basic service set identifier or the plurality of stations belong to different basic service sets.

19. The device of any one of claims 14 to 16, wherein the device further comprises:
a setting module configured to set a transmitting address field of the broadcast response frame as a transmitted service set identifier, in a case where a multiple basic service set identifier is supported and a value of the transmitted service set identifier having been received by the at least one station is known.

20. The device of any one of claims 14 to 16, wherein the device further comprises:
a setting module configured to group the plurality of stations according to a value of a receiving address of the request frame, in a case where a multiple basic service set identifier is supported and whether the at least one station has received a value of a transmitted service set identifier is not known, wherein stations with a same value of the receiving address are grouped into a same group, and the broadcast response frame is respectively sent by group, a transmitting address field of the broadcast response frame being set as the value of the receiving address of the request frame.

21. A device for radio frame transmission, comprising a memory and a processor, wherein
the memory is configured to store following instructions: receiving a request frame sent simultaneously or in a time-sharing manner by at least one station; and sending a broadcast response frame to the at least one station; and
the processor is configured to execute instructions stored in the memory.

22. A method for radio frame transmission, applied to a communication station, comprising:

receiving, by a station, a broadcast response frame, and parsing the broadcast response frame; and
acquiring information related to the station from the broadcast response frame.

23. The method of claim 22, wherein before the receiving, by the station, the broadcast response frame, the method further comprises:

sending a request frame in a competitive manner to a sending station from which the broadcast response frame is sent; or
sending a request frame in an uplink frequency division multiple access manner to a sending station from which the broadcast response frame is sent after receiving a trigger frame or a scheduling frame sent from the sending station, wherein a transmitting address of the trigger frame or the scheduling frame is a service set identifier or a medium access control address transmitted from an access point to be associated or an associated access point.

24. The method of claim 23, wherein
the request frame carries capability information of supporting a multiple basic service set, or a receiving address of the request frame is set as a transmitted service set identifier.

25. The method of claim 22, wherein the parsing the broadcast response frame comprises:
parsing, by the station, a medium access control address or a value of a service set identifier set in a transmitting address field of the broadcast response frame, and determining, by the station, whether the broadcast response frame is from an access point requested to be associated or an associated access point.

26. The method of claim 25, wherein the parsing the broadcast response frame further comprises:
determining, according to a type field and/or a subtype field of the broadcast response frame, a type of the broadcast response frame to be a broadcast association response frame, a broadcast probe response frame, or a general broadcast service response frame.

27. The method of claim 22, wherein before the acquiring the information related to the station from the broadcast response frame, the method further comprises:
determining that a station identifier carried in the broadcast response frame is the same as a station identifier of the station or a station identifier carried in the broadcast response frame is matched with a media control access address of the station.

28. The method of any one of claims 22 to 27, wherein the acquiring the information related to the station from the broadcast response frame comprises:

in a case where the broadcast response frame is a broadcast association response frame, judging whether an association between the station and a corresponding access point is successful or not according to a value of a status code, and in response to judging that the association is successful, reading a value of an association identifier indicated by the broadcast association response frame and taking the value of the association identifier as an association identifier associated with the access point; in a case where the broadcast response frame is a general broadcast service response frame, judging whether a general broadcast service request sent by the station is successful or not according to a value of a status code, and reading a broadcast protocol information element or query response information in response to judging that the general broadcast service request is successful.

29. A device for radio frame transmission, comprising:

a parsing module configured to receive a broadcast response frame and parse the broadcast response frame; and
an acquisition module configured to acquire information related to a station from the broadcast response frame.

30. The device of claim 29, wherein the device further comprises:
a sending module configured to send a request frame in a competitive manner to a sending station from which the broadcast response frame is sent before a receiving module receives the broadcast response frame, wherein the request frame carries capability information of supporting a multiple basic service set, or a receiving address of the request frame is set as a transmitted service set identifier.

31. The device of claim 29, wherein the device further comprises: a sending module,
a receiving module configured to receive a trigger frame or a scheduling frame sent from a sending station from which the broadcast response frame is sent, wherein a transmitting address of the trigger frame or the scheduling frame is a service set identifier or a medium access control address transmitted from an access point to be associated or an associated access point; and
the sending module is configured to send a request frame to the sending station in an uplink frequency division multiple access manner.

32. The device of claim 29, wherein
the parsing module parsing the broadcast response frame comprises: parsing a medium access control address or a value of a service set identifier set in a transmitting address field of the broadcast response frame, and determining whether the broadcast response frame is from an access point requested to be associated or an associated access point.

33. The device of claim 32, wherein
the parsing module parsing the broadcast response frame further comprises: determining, according to a type field and/or a subtype field of the broadcast response frame, a type of the broadcast response frame to be a broadcast association response frame, a broadcast probe response frame, or a general broadcast service response frame.

34. The device of claim 29, wherein the device further comprises:
a determination module configured to determine that a station identifier carried in the broadcast response frame is the same as a station identifier of the station or a station identifier carried in the broadcast response frame is matched with a media control access address of the station.

35. The device of any one of claims 29 to 34, wherein the acquisition module is configured to:

in a case where the broadcast response frame is a broadcast association response frame, judge whether an association between the station and a corresponding access point is successful or not according to a value of a status code, and in response to judging that the association is successful, read a value of an association identifier indicated by the broadcast association response frame and take the value of the association identifier as an association identifier associated with the access point; and
in a case where the broadcast response frame is a general broadcast service response frame, judge whether a general broadcast service request sent by the station is successful or not according to a value of a status code, and read a broadcast protocol information element or query response information in response to judging that the general broadcast service request is successful.

36. A device for radio frame transmission, comprising a memory and a processor, wherein
the memory is configured to store following instructions: receiving a broadcast response frame, and parsing the broadcast response frame; and acquiring information related to a station from the broadcast response frame; and
the processor is configured to execute instructions stored in the memory.

37. A storage medium having stored therein a computer program, wherein the computer program is configured to perform, when executed, the method of any one of claims 1 to 13 or the method of any one of claims 22 to 28.

**38.** An electronic device comprising a memory having a computer program stored therein and a processor configured to run the computer program to perform the method of any one of claims 1 to 13 or to perform the method of any one of claims 22 to 28.

```
                                                                      11
┌─────────────────────────────────────────────────────────────┐
│   receive a request frame sent simultaneously or in a         │
│   time-sharing manner by at least one station                 │
└─────────────────────────────────────────────────────────────┘
                                                                      12
┌─────────────────────────────────────────────────────────────┐
│     send a broadcast response frame to the at least one station│
└─────────────────────────────────────────────────────────────┘
```

**Fig. 1**

```
                                                                      21
┌─────────────────────────────────────────────────────────────┐
│   receive, by a station, a broadcast response frame, and parse │
│   the broadcast response frame                                 │
└─────────────────────────────────────────────────────────────┘
                                                                      22
┌─────────────────────────────────────────────────────────────┐
│   acquire information related to the station from the broadcast│
│   response frame                                               │
└─────────────────────────────────────────────────────────────┘
```

**Fig. 2**

repeatable

| Common Informtion | Per STA Info | ... | Per STA Info |

**Fig. 3**

| No. | Information | Remarks |
|---|---|---|
| x | Capability Information | |
| x | Supported Rate | Optional |
| x | EDCA Parameter Set | Optional |
| x | Coexistence Information of BSS | Optional |
| x | Operation Information | Optional |
| x | BSS Maximum Idle Period | Optional |
| x | Quality of Service Mapping | Optional |
| x | Neighbor Report | Optional |
| x | Operation Mode | Optional |
| | ... | |

**Fig. 4**

| Status Code | Station Identifier | AID |
|---|---|---|

**Fig. 5**

| | Status Code | MAC address of STA 1 | AID value assigned to STA 1 by AP | | MAC address of STA 2 | AID value assigned to STA 2 by AP | | MAC address of STA 3 | AID value assigned to STA 3 by AP |
|---|---|---|---|---|---|---|---|---|---|
| | 0 | A1 | AID1 | 0 | A2 | AID2 | 0 | A3 | AID3 |

**Fig. 6**

Common Information Field

Per STA Info Field, repeatable

| Capabili -ty Info | Len- gth | Info Element 1 | Info Element 2 | ... | Len- gth | Status Code | Station ID | AID | Info Element n | ... | Info Element N |
|---|---|---|---|---|---|---|---|---|---|---|---|

**Fig. 7**

| Status Code | MAC address of STA 1 | AID value assigned to STA 1 by AP | | MAC address of STA 2 | AID value assigned to STA 2 by AP | | MAC address of STA 3 | AID value assigned to STA 3 by AP |
|---|---|---|---|---|---|---|---|---|
| 0 | A1 | AID1 | 0 | A2 | AID2 | 1 | A3 | AID3 |

**Fig. 8**

M-BA

Per STA Info Fields of Frame Body containing association information corresponding to STA 1 to 4

Per STA Info Fields of Frame Body containing association information corresponding to STA 5 to 7

Broadcast Association Response Frame

Broadcast Association Response Frame

STA1 association request frame

STA2 association request frame

STA3 association request frame

STA4 association request frame

STA5 association request frame

STA6 association request frame

STA7 association request frame

**Fig. 9**

| Status Code | Station Identifier | AID | Resource Allocation |
|---|---|---|---|

**Fig. 10**

**Fig. 11**

**Fig. 12**

**Fig. 13**

Receiving Module

Sending Module

Device for Radio Frame Transmission

**Fig. 14**

Parsing Module

Acquisition Module

Device for Radio Frame Transmission

**Fig. 15**

# INTERNATIONAL SEARCH REPORT

| International application No. |
|---|
| PCT/CN2018/079771 |

## A. CLASSIFICATION OF SUBJECT MATTER

H04W 72/04 (2009.01) i; H04W 84/12 (2009.01) n

According to International Patent Classification (IPC) or to both national classification and IPC

## B. FIELDS SEARCHED

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

CNABS, CNTXT, CNKI, VEN, IEEE: 关联请求, 关联响应, 竞争, 争用, 复用, 多用户, 关联标识, 服务集, 地址, association request, association response, EDCA, OFDMA, multi-user, MU, AID, BSS, SSID, address, 802.11, wlan

## C. DOCUMENTS CONSIDERED TO BE RELEVANT

| Category* | Citation of document, with indication, where appropriate, of the relevant passages | Relevant to claim No. |
|---|---|---|
| X | EP 3065493 A1 (LG ELECTRONICS INC.), 07 September 2016 (07.09.2016), description, paragraphs [0004]-[0007] and [0052]-[0055] | 1-8, 14-16, 21, 22, 29, 36-38 |
| A | WO 2017027479 A1 (NEWRACOM INC.), 16 February 2017 (16.02.2017), entire document | 1-38 |
| A | CN 103209045 A (HUAWEI DEVICE CO., LTD.), 17 July 2013 (17.07.2013), entire document | 1-38 |
| A | WO 2016108633 A1 (LG ELECTRONICS INC.), 07 July 2016 (07.07.2016), entire document | 1-38 |

☐ Further documents are listed in the continuation of Box C.　　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 June 2018 | 28 June 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LU, Shan<br><br>Telephone No. 86-(010)-62089551 |

Form PCT/ISA/210 (second sheet) (January 2015)

## INTERNATIONAL SEARCH REPORT
### Information on patent family members

International application No.

PCT/CN2018/079771

| Patent Documents referred in the Report | Publication Date | Patent Family | Publication Date |
|---|---|---|---|
| EP 3065493 A1 | 07 September 2016 | WO 2016140533 A1 | 09 September 2016 |
| | | CN 107667560 A | 06 February 2018 |
| | | KR 20170118127 A | 24 October 2017 |
| | | US 2016262157 A1 | 08 September 2016 |
| | | JP 2018512765 W | 17 May 2018 |
| WO 2017027479 A1 | 16 February 2017 | US 2017041929 A1 | 09 February 2017 |
| | | CN 107925470 A | 17 April 2018 |
| | | IN 201817003431 A | 11 May 2018 |
| CN 103209045 A | 17 July 2013 | EP 2793448 B1 | 15 March 2017 |
| | | ES 2626354 T3 | 24 July 2017 |
| | | EP 2793448 A4 | 11 March 2015 |
| | | US 9906491 B2 | 27 February 2018 |
| | | JP 5904347 B2 | 13 April 2016 |
| | | WO 2013104287 A1 | 18 July 2013 |
| | | US 2014321449 A1 | 30 October 2014 |
| | | EP 2793448 A1 | 22 October 2014 |
| | | JP 2015503876 A | 02 February 2015 |
| | | SG 11201510187 A | 28 January 2016 |
| | | SG 11201510187 B | 04 August 2016 |
| WO 2016108633 A1 | 07 July 2016 | EP 3242527 A1 | 08 November 2017 |
| | | KR 20170105035 A | 18 September 2017 |
| | | JP 2018500848 A | 11 January 2018 |
| | | CN 107113882 A | 29 August 2017 |
| | | US 2017367118 A1 | 21 December 2017 |

Form PCT/ISA/210 (patent family annex) (January 2015)